Europäisches Patentamt

European Patent Office

Office européen des brevets

(11) Publication number: **0 126 051**
**B1**

# EUROPEAN PATENT SPECIFICATION

(45) Date of publication of patent specification: **10.08.88**

(51) Int. Cl.⁴: **B 60 T 8/00**

(21) Application number: **84850147.4**

(22) Date of filing: **09.05.84**

(54) **Method and device for preventing slipping and/or skidding between driveable and breakable wheels and the supporting surface in vehicle traction systems.**

(30) Priority: **10.05.83 SE 8302686**

(43) Date of publication of application:
**21.11.84 Bulletin 84/47**

(45) Publication of the grant of the patent:
**10.08.88 Bulletin 88/32**

(84) Designated Contracting States:
**CH DE FR GB IT LI**

(56) References cited:
**US-A-3 398 994**
**US-A-3 832 013**
**US-A-3 887 240**
**US-A-4 071 282**

**PATENTS ABSTRACTS OF JAPAN, vol. 7, no.**
**141 (M-223)1286r, 21st June 1983**

(73) Proprietor: **VOLVO FLYGMOTOR AB**
**Box 136**
**S-46101 Trollhättan (SE)**

(72) Inventor: **Sjunnesson, Lars**
**Lextorpsvägen 415**
**S-461 64 Trollhättan (SE)**

(74) Representative: **Delmar, John-Ake**
**Östermalmsgatan 45**
**S-114 26 Stockholm (SE)**

Courier Press, Leamington Spa, England.

**0 126 051**

## Description

The present invention refers to a method and a device for preventing slipping and/or skidding between driveable and brakable wheels and the supporting surface in vehicle traction systems, particularly such systems in which all wheels or wheel axles of the vehicle are individually driven, in which method the rotary speed of each of the wheels or wheel axles is measured and rotary speed differentials therebetween, if any, are determined, and furthermore the acceleration of said wheels or axles is measured.

Since long it is well-known not only that when vehicle wheels slip or skid damages rapidly will occur on the wheels but·also that great loads will occur in axles and gear transmissions when the wheels again get hold after such slipping or skidding. In order to avoid such damages and loads well operating slip-protecting measured are required, which relatively easily can be obtained when there is accessible a nondriven and/or non-braked wheel. On the contrary, should the vehicle only have driven and/or braked wheels, the problem is increased. Then it cannot namely be clearly determined whether, when the vehicle slips, one wheel does not slip, i.e. exhibits true speed. This means that by measuring rotary speed differentials it cannot be detected when the slipping has ceased.

Nevertheless, hitherto used control systems for slipping protection purposes have been substantially based on rotary speed measuring. In electrically driven locomotives, such as ASEA's RC-locomotive, which lacks reference wheels, the slip prevention control system has been operated on the basis of the wheel acceleration, namely by measuring of the rotary speed of the wheels and deriving the values measured. From said two parameters a signal for detecting slipping and/or skidding, if any, has been formed. Said system has several drawbacks, however, and covers as an estimation only 80—90 per cent of slipping and skidding occasions present. The system produces signals in error and covers only acceleration courses since braking is not made electrically. Said control system does not respond primarily to slowly increasing slipping or skidding processes which may be of long duration and which are very difficult to detect but also produce serious damages to the wheels.

It has also been suggested control systems based on measuring of rotary speed differentials between driven wheels of a vehicle but also said systems have suffered from similar drawbacks difficult to remedy.

The main object of the present invention therefore now is to suggest a method and a device for preventing slipping and/or skidding between driveable and brakable wheels and the supporting surface in vehicle traction systems of the afore-mentioned kind, in which in a substantially more effective way than up to now also slowly increasing slipping and/or skidding conditions may be caught at the same time as the frequency of signalling in error may be substantially reduced. This is achieved according to the present invention by a method which distinguishes substantially in that dependent on a control parameter of the vehicle and on the actual direction of travel of the vehicle there is provided an expectation output signal, which when acceleration is expected brings the wheel or axle which has too high a rotary speed in relation to the other wheels or axles and/or an excessive acceleration in comparison with a calculated maximum possible acceleration, to release a slip indication, by means of which steps are taken for eliminating said slipping, while said signal when deceleration is expected, brings the wheel or axle which has the lowest relative rotary speed or excessive negative acceleration in comparison with a calculated possible negative acceleration, respectively, to release a skid indication, by means of which steps likewise are taken for eliminating said skidding, and said respective indications are maintained until, when acceleration is expected, the slipping wheel or axle exhibits negative acceleration, and when deceleration is expected, the skidding wheel or axle exhibits positive acceleration, the rotary speed differentials between the wheels or axles lying within a predetermined range of limit values, whereby said method is capable of responding also to so-called creeping slipping or skidding of one or more wheels or axles of the vehicle.

By utilizing the feature of an "expectation function" is obtained a reliable indication of when the slipping or skidding really ceases independent of whether all axles slip or skid, in spite of having no reference wheel.

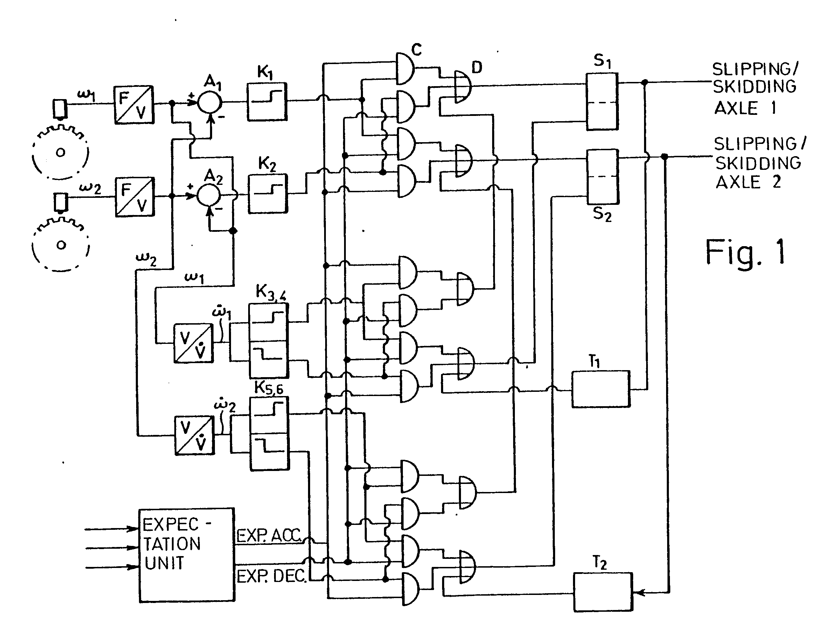

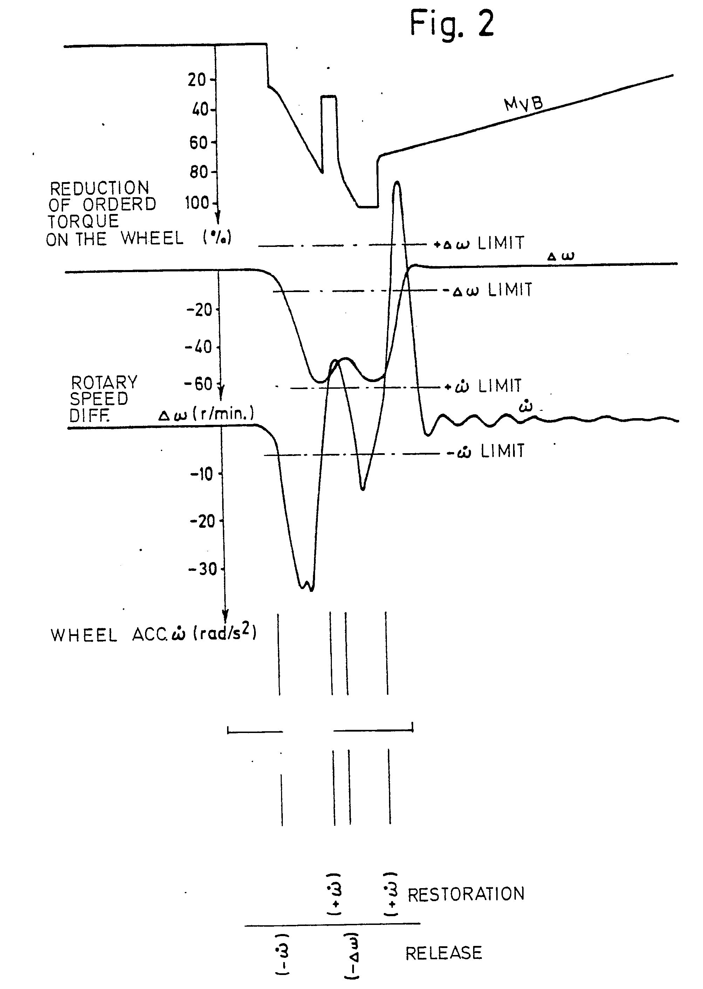

By way of example, the invention will be further described below with reference to the accompanying drawings, in which Fig 1 is a partial view of a circuit diagram of an example of a control system for carrying out the inventive method and Fig 2 is a diagram produced by a recording measuring equipment in a test for application of the inventive method and with the positions of the limit values indicated for the various parameters. The test refers to braking with fully developed braking force and sudden change of the adhesion from >0.3 to <0.1.

The present invention is primarily intended to be applied in vehicle drive systems in which all wheels or wheel axles are individually driveable and brakable. This might for instance be the case in electrically driven locomotives but also in other locomotives and vehicles having hydrostatic power transmission between e.g. an internal combustion engine and a number of wheels or wheel axles. For carrying out the invention is used a control device which preferably comprises an analog portion and a digital portion. To the analog portion belong first of all revolution counting means for the respective wheels or wheel axles, which means might be of a type known per se and therefore not further illustrated in the drawings. Said revolution counting means, however, preferably consist of electromagnetic means, so-called pick-ups. The revolution counting means emit output signals corresponding to the rotary speeds or number of revolutions $\omega_1$, $\omega_2$ for the respective wheels. The analog portion furthermore comprises not further illustrated acceleration-measuring means which are intended to determine the acceleration on the basis of the output signals from the revolution counting means. Preferably said acceleration-measuring means are constituted of known deriving circuits for said output signals known per se so as to thereby provide acceleration output signals $\dot{\omega}_1$, $\dot{\omega}_2$.

In summation points $A_1$, $A_2$ is formed the differential between the output signals of the revolution counting means and after said summation points $A_1$, $A_2$ are arranged comparators, particularly comparators $K_1$, $K_2$, adapted to receive the resulting signal from the summation points $A_1$, $A_2$ obtained from a speed differential, if any.

The comparators $K_1$, $K_2$ are adapted to carry out several functions. They compare the resulting revolution signals and determine the value of the highest number of revolutions and the lowest, respectively and also determine the differential between the highest and lowest number of revolutions. Furthermore, the comparators $K_1$, $K_2$ are made such that they determine whether said differential thereby exceeds a predetermined limit value, in which case they emit an output signal, otherwise not.

Along with the above-stated there are also comparators $K_3$, $K_4$, $K_5$, $K_6$ which are made such that when any of the acceleration output signals $\dot{\omega}_1$, $\dot{\omega}_2$ exhibits a too great positive value (acceleration) or negative value (deceleration) an output signal is obtained which indicates which wheel or axle that has accelerated and which wheel or axle that has decelerated.

After the comparators $K_1$—$K_6$ are connected AND- and OR-circuits C and D, respectively, for determining on the basis of the respective output signal from the aforementioned which wheel or which wheel axle that has too great acceleration or too great number of revolutions relative the other wheels or wheel axles and which wheel or wheel axle that has too low acceleration or too low number of revolutions relative the other wheels or wheel axles. In its turn, the respective OR-circuit is then connected to a setting means $S_1$, $S_2$, which suitably is constituted by an electric switch means known per se for a purpose which will be further evident from the following.

In the analog portion there is finally also included on one hand a transducer (not illustrated) for the determining control parameter such as the hydraulic system pressure as far as a hydrostatic power transmission is concerned, or the current in an electric traction system, and on the other a detecting means (not illustrated, too) for the direction of travel of the vehicle as selected by the driver.

The outputs from said two last-mentioned means as well as the outputs from the setting means $S_1$, $S_2$ and from the acceleration measuring means are carried to the digital portion, which constitutes a signal processing device, such as a simple micro-processor of known type. According to the invention the digital portion is adapted to determine on the basis of the outputs from the control parameter transducer and the detecting means for the direction of vehicle travel whether acceleration or deceleration of the vehicle is to be expected at the wheels or wheel axles and hence also whether slipping or skidding is to be expected, and then to form an electric expectation output signal for the expected condition. Preferably this is carried out in a circuit including a comparator and an "EXCLUSIVE-OR"-circuit. In other words, this means that a comparison is made between the direction of vehicle travel as desired by the driver with the direction of vehicle travel which the control parameter transducer indicates that the wheels or wheel axles endeavour to achieve. If this comparison results in *similar* signals this means that an acceleration is to be expected, while if the signals are *different* a deceleration is expected. This signal is held when any of the output signals $S_1$ or $S_2$ indicates slipping or skidding such that the elimination of the slipping or skidding is fulfilled independent of changes of the input signals, control parameter or vehicle travel direction detecting means.

Furthermore, the digital portion is adapted to correlate, when acceleration is expected, the expectation output signal to the signal of the wheel or the wheel axle which has too high a rotary speed in relation to the other wheels or axles, while when deceleration is expected said digital portions correlate to the signal of the wheel or wheel axle which has a rotary speed or number of revolutions which is lower than that of other wheels or axles. Said correlation results in an output signal which "sets" the condition of the setting means $S_1$ and $S_2$, respectively, so as to thereby release desired measures as to the actual control parameter (pressure reduction, current reduction). The output signal from the setting means as to slipping or alternatively locking of the respective wheel axle or wheel is held as known per se momentarily, even if the releasing signal ceases.

According to the invention certain restoration conditions according to the following (see also Table) are namely superposed on the digital portion. When the last-mentioned condition of the setting means $S_1$, $S_2$ has been determined, the expectation output signal is namely correlated to the output signal from the acceleration measuring means of the wheel or wheel axle in question and provides a cancellation of the measure determined by the setting means $S_1$, $S_2$ not until the acceleration output signal alters its sign. Should the difference in number of revolutions still be too great, however, the digital portion again releases an output signal from the comparator $K_1$ and $K_2$ respectively and the operation sequence is repeated.

In order to prevent the slip or skid detection to be maintained for a too long time, timing means $T_1$, $T_2$ might be utilized. Said timing means $T_1$, $T_2$ are then adapted to restore the setting means $S_1$, $S_2$ after a predetermined period of time, such as one second should no "normal" restoring already has occurred. If a slipping or skidding is present as indicated by the difference in numbers of revolutions, when the timing means restore the setting means $S_1$, $S_2$, it is immediately released a new indication by the actual setting means $S_1$ or $S_2$. The timing means hence contribute to a rapid cancellation of erroneous operations, if any, of the control device.

By means of the above-stated control device the method according to the invention thus can be carried out. According to said method an expectation output signal is provided dependent on a control parameter of the vehicle and on the actual direction of travel of the vehicle, said output signal when acceleration is expected brings the wheel, which has too high a rotary speed in relation to other wheels or wheel axles and/or exhibits too great acceleration in comparison with a calculated maximum possible acceleration, to release an indication of slipping by means of which steps then are taken for elimination of said slipping. On the contrary, should deceleration be expected the wheel which has the lowest relative number of revolutions or too great negative acceleration in comparison with a calculated possible acceleration is brought to release an indication of skidding, by means of which steps likewise are taken for eliminating said skidding. The respective indication is held until, when acceleration is expected, the slipping wheel exhibits negative acceleration, and when deceleration is expected the skidding wheel exhibits positive acceleration. The rotary speed differentials between the wheels thereby have to lie within a predetermined range of limit values such that the method might respond also to so-called "creeping" slipping and skidding, respectively, of one or more wheels or wheel axles of the vehicle.

Should several wheels or axles be slipping but only one wheel or axle indicates slipping, which might occur at so-called "creeping" slipping, the other will immediately indicate slipping when the slip-indicating wheel or axle again gets hold on the supporting surface.

The various combinations and functions in the method according to the invention are disclosed in the following table.

TABLE

| Signal after the comparator | Expected motion change | Output signal | Restored by |
|---|---|---|---|
| $+\Delta\omega$ | acc | SL 1 | $-\dot{\omega}_1$ |
| $-\Delta\omega$ | acc | SL 2 | $-\dot{\omega}_2$ |
| $+\dot{\omega}_1$ | acc | SL 1 | $-\dot{\omega}_1$ |
| $-\dot{\omega}_1$ | acc | — | —* |
| $+\dot{\omega}_2$ | acc | SL 2 | $-\dot{\omega}_2$ |
| $-\dot{\omega}_2$ | acc | — | —* |
| $+\Delta\omega$ | dec | SL 2 | $+\dot{\omega}_2$ |
| $-\Delta\omega$ | dec | SL 1 | $+\dot{\omega}_1$ |
| $+\dot{\omega}_1$ | dec | — | —* |
| $-\dot{\omega}_1$ | dec | SL 1 | $+\dot{\omega}_1$ |
| $+\dot{\omega}_2$ | dec | — | —* |
| $-\dot{\omega}_2$ | dec | SL 2 | $+\dot{\omega}_2$ |

*) no release (false signal).

For the sake of simplicity, the invention has been described in the above-stated as applied to a vehicle having two wheels or axles but it is obvious that the invention also can be applied to any number of wheels or axles. The electric circuits illustrated in the circuit diagram only contain known elementary components and it might thus also be obvious to artisans that various modifications of the design and/or cooperation of the circuits can be obtained within the scope of the present invention such as defined in the accompanying claims.

**Claims**

1. A method for preventing slipping (at acceleration) and/or skidding (at deceleration) between driveable and brakable wheels and the supporting surface in vehicle traction systems, particularly of the kind in which all wheels or wheel axles of the vehicle are driven individually, in which method the rotary speed of each of the wheels or wheel axles is measured and rotary speed differentials are determined, if any, and furthermore the acceleration of said wheels or axles is measured, characterized in that dependent on a control parameter of the vehicle and on the actual direction of travel of the vehicle there is provided an expectation output signal, which when acceleration is expected, brings the wheel or axle which has too high a rotary speed in relation to the other wheels or axles and/or an excessive acceleration in comparison with a calculated maximum possible acceleration, to release a slip indication, by means of which steps are taken for eliminating said slipping, while said signal when deceleration is expected, brings the wheel or axle which has the lowest relative rotary speed or excessive negative acceleration in comparison with a calculated possible negative acceleration respectively to release a skid indication, by means of which steps likewise are taken for eliminating said skidding, and said respective indications are maintained until, when acceleration is expected, the slipping wheel or axle exhibits negative acceleration, and when deceleration is expected, the skidding wheel or axle exhibits positive acceleration, the rotary speed differentials between the wheels or axles lying within a predetermined range of limit values, whereby said method is capable of responding also to so-called creeping slipping or skidding of one or more wheels or axles of the vehicle.

2. A device for carrying out the method according to claim 1 and comprising a control device including revolution counting and acceleration-measuring means, characterized in that it comprises an expectation output signal forming unit, which is responsive to first comparators ($K_1$, $K_2$) for comparing the output signals from the revolution counting means and determination of whether the difference between said signals is too great and of which wheel or which axle that has too high a rotary speed and which wheel or axle that has too low rotary speed, and to second comparators ($K_3$—$K_6$) for determination of whether rotary speed changes at any wheel or axle exceed or lie below the limit value, as well as AND- and OR-circuits for receiving said signals from the revolution counting means and responsive thereto act upon the position of setting means ($S_1$, $S_2$), the control device furthermore comprising a transducer for the actual control parameter to be controlled, such as the pressure or current to the traction engine of the vehicle, and a transducer for the direction of travel of the vehicle as selected by its driver, the expectation output signal unit being constituted by a digital portion of the control device, which is adapted to form, dependent on the aforementioned means included in said control device, an expectation output signal for correlation with the output signal from the setting means ($S_1$, $S_2$) and for releasing an indication of slipping or skidding, alternatively.

3. A device according to claim 2, characterized in that after the acceleration measuring means are connected timing means ($T_1$, $T_2$) for restoration of the setting means ($S_1$, $S_2$) dependent on the time.

**Patentansprüche**

1. Ein Verfahren zur Verhinderung von Schlupf (bei Beschleunigung) und/oder Blockieren (bei Verzögerung) zwischen antreibbaren und bremsbaren Rädern und der Unterstützungsfläche bei Fahrzeugantriebssystemen insbesondere von der Art, bei denen alle Räder oder Radachsen des Fahrzeugs einzeln angetrieben werden, wobei bei diesem Verfahren die Umdrehungsgeschwindigkeit eines jeden Rades oder jeder Radachse gemessen wird und Umdrehungsgeschwindigkeitsdifferentialen bestimmt werden, wenn welche vorhanden sind und außerdem die Beschleunigung der Räder oder Achsen gemessen wird, dadurch gekennzeichnet, daß in Abhängigkeit von einem Kontrollparameter des Fahrzeugs und von der tatsächlichen Fortbewegungsrichtung ein Erwartungsausgangssignal erzeugt wird, welches bei zu erwartender Beschleunigung das Rad oder die Achse mit einer zu hohen Umdrehungsgeschwindigkeit mit Bezug auf die anderen Räder oder Achsen und/oder einer überhohen Beschleunigung im Vergleich mit einer errechneten möglichen Maximalbeschleunigung, dazu bringt, eine Schlupfanzeige auszulösen, mit deren Hilfe Maßnahmen zur Beseitigung dieses Schlupfes unternommen werden, wogegen dieses Signal bei einer zu erwartenden Verzögerung das Rad oder die Achse mit der niedrigsten relativen Umdrehungsgeschwindigkeit bzw. übermäßiger negativer Beschleunigung im Vergleich mit einer errechneten möglichen Negativbeschleunigung dazu bringt, eine Blockieranzeige auszulösen, mit deren Hilfe ebenfalls Maßnahme zur Beseitigung des Blockierens unternommen werden, und daß diese Anzeigen bestehen bleiben, bis bei zu erwartender Beschleunigung das Rad oder die Achse mit Schlupf negative Beschleunigung und bei zu erwartender Verzögerung das blockierende Rad oder die Achse positive Beschleunigung aufweist, wobei die Differentialen der Umdrehungsgeschwindigkeiten zwischen den Rädern oder Achsen innerhalb eines vorbestimmten Bereiches von Grenzwerten liegen, wodurch dieses Verfahren ebenso auf ein sogenanntes kriechendes Schlupfen oder Blockieren von einem oder mehreren Rädern oder Achsen des Fahrzeugs ansprechen kann.

2. Eine Vorrichtung zur Durchführung des Verfahrens gemäß Anspruch 1 und mit einer Kontrollvorrichtung, die eine Umdrehungszahl- und Beschleunigungsmeßvorrichtung enthält, dadurch gekennzeichnet, daß sie eine ein Erwartungsausgangssignal erzeugende Einheit enthält, welche auf erste Kompartoren ($K_1$, $K_2$) zum Vergleich oder Ausgangssignale von der Umdrehungszahlvorrichtung und zur Bestimmung ob der Unterschied zwischen diesen Signalen zu groß ist und welches Rad oder welche Achse eine zu hohe Umdrehungsgeschwindigkeit und welches Rad oder welche Achse eine zu niedrige Umdrehungsgeschwindigkeit aufweist und auf zweite Komparatoren ($K_3$—$K_6$) anspricht, zur Bestimmung ob Umdrehungsgeschwindigkeitsänderungen an einem beliebigen Rad oder einer beliebigen Achse den Grenzwert überschreiten oder darunter liegen, sowie daß UND- und ODER-Schaltungen zum Empfang der und Ansprechen auf die Signale von der Umdrehungszählvorrichtung auf die Position von Einstell- vorrichtungen ($S_1$, $S_2$) einwirken, wobei die Kontrollvorrichtung zusätzlich einen Umsetzer für die zu

5

steuernden tatsächlichen Kontrollparameter, wie da sind der Druck oder der Strom zur Zugmaschine des Fahrzeugs und einen Umsetzer für die Fortbewegungsrichtung des Fahrzeugs wie sie von der Bedienungsperson gewählt wird aufweist, wobei die Erwartungsausgangssignaleinheit von einem Digitalteil der Kontrollvorrichtung dargestellt wird, welche dafür bestimmt ist in Abhängigkeit von den zuvor erwähnten in der Kontrollvorrichtung enthaltenen Vorrichtungen ein Erwartungsausgangssignal für die Wechselwirkung mit dem Ausgangssignal von den Einstellvorrichtungen ($S_1$, $S_2$) zu bilden und eine jeweilige Anzeige für Schlupf oder Blockieren zu erzeugen.

3. Eine Vorrichtung gemäß Anspruch 1, dadurch gekennzeichnet, daß nach der Beschleunigungsmeßvorrichtung Timervorrichtungen ($T_1$, $T_2$) zur Zurückstellung der Einstellvorrichtngen ($S_1$, $S_2$) in Abhängigkeit von der Zeit angeschlossen sind.

**Revendications**

1. Un procédé pour empêcher le patinage (à l'accélération) et/ou le dérapage (à la décélération) entre des roues entraînables et freinables et la surface de support dans des systèmes de traction de véhicules, en particulier du type dans lequel toutes les roues ou tous les axes de roue du véhicule sont entraînés individuellement, procédé dans lequel la vitesse angulaire de chacune des roues ou de chacun des axes de roue est mesurée et des différentiels de vitesse angulaire sont déterminés, le cas échéant, et l'accélération desdites roues ou desdits axes étant de plus mesurée, caractérisé en ce que, en fonction d'un paramètre de commande du véhicule et de la direction effective de déplacement du véhicule, il est délivré un signal de sortie d'attente qui, lorsqu'une accélération est prévue, amène la roue ou l'axe qui a une vitesse angulaire trop élevée par rapport aux autres roues ou axes et/ou une accélération excessive par comparaison avec une accélération possible maximale calculée à délivrer une indication de patinage au moyen de laquelle des dispositions sont prises pour éliminer ledit glissement tandis que ledit signal, lorsqu'une décélération est prévue, amène la roue ou l'axe qui présente la vitesse angulaire relative la plus faible ou une accélération négative excessive par comparaison avec une accélération négative possible calculée à délivrer une indication de dérapage, et lesdites indications respectives sont maintenues jusqu'à ce que, lorsqu'une accélération est prévue, la roue ou l'axe qui patine présente une accélération négative et, lorsqu'une décélération est prévue, la roue ou l'axe qui dérape présente une accélération positive, les différentiels de vitesse angulaire entre les roues ou axes étant situés dans une gamme prédéterminée de valeurs limites, le procédé étant ainsi capable d'être sensible également au patinage ou au dérapage de glissement d'au moins l'une des roues ou de l'un des axes du véhicule.

2. Un dispositif pour mettre en oeuvre le procédé selon la revendication 1 et comportant un dispositif de commande comprenant des moyens de comptage de tours et de mesure d'accélération, caractérisé en ce qu'il comporte une unité de création d'un signal de sortie d'attente qui est sensible à des premiers comparateurs ($K_1$, $K_2$) pour comparer les signaux de sortie provenant des moyens de comptage de tours et pour déterminer si la différence entre lesdits signaux est trop grande et quelle est la roue ou l'axe de roue qui présente une vitesse angulaire trop élevée et quel roue ou axe de roue présente une vitesse angulaire trop faible, et à des seconds comparateurs ($K_3$—$K_6$) pour déterminer si des variations de vitesse angulaire sur toute roue ou tout axe sont situées au-dessus ou au-dessous de la valeur limite, de même que des circuits ET et OU pour recevoir lesdits signaux à partir des moyens de comptage de tours et sensibles à ceux-ci, ces circuits agissant sur la position de moyens de réglage ($S_1$, $S_2$), le dispositif de commande comportant de plus un transducteur pour le paramètre de commande effectif à commander, tel que la pression ou le courant délivré au moteur de traction du véhicule, et un transducteur pour la direction de déplacement du béhicule sélectionnée par son conducteur, l'unité de signal de sortie d'attente étant constituée par une partie numérique du dispositif de commande qui est agencée pour créer, sous la dépendance des moyens ci-dessus mentionnés compris dans ledit dispositif de commande, un signal de sortie d'attente pour faire une corrélation avec le signal de sortie provenant des moyens de réglage ($S_1$, $S_2$) et pour délivrer une indication de patinage ou de dérapage.

3. Un dispositif selon la revendication 2, caractérisé en ce que, après les moyens de mesure d'accélération, sont prévus des moyens de rythme ($T_1$, $T_2$) pour le rétablissement des moyens de réglage ($S_1$, $S_2$) en fonction du temps.

Fig. 1

SLIPPING/SKIDDING AXLE 1

SLIPPING/SKIDDING AXLE 2

0 126 051

# Fig. 2